# EUROPÄISCHE PATENTANMELDUNG

(11) **EP 2 522 501 A1**
(43) Veröffentlichungstag der Anmeldung: **14.11.2012**
(21) Anmeldenummer: 11165999.1
(22) Anmeldetag: 13.05.2011
(51) Int. Cl.: B32B 3/28, D04H 3/04, D04H 13/00, E04D 5/12, E04H 15/54

(54) **Textiles Bauelement**

(71) Anmelder: Arch-Tex KG, 24939 Flensburg (DE)
(72) Erfinder: Juhnke, Klaus-Jürgen, Dr., 22359 Hamburg (DE)
(74) Vertreter: Hiller, Volker

(57) **Zusammenfassung**

Vorgeschlagen wird ein textiler Baukörper, umfassend ausgerichtete Komponenten, deren Ausrichtung entlang von Orientierungsbahnen verlaufen, dadurch gekennzeichnet, dass die Orientierungsbahnen mindestens sinuslinig und/oder mindestens strahlungsförmig verlaufen und
■ bei denen die sinuslinigen Orientierungsbahnen zur Ausrichtung der Komponenten mit unterschiedlichen Amplituden zwischen benachbarten Fixierungspunkten für den textilen Baukörper verlegt sind,
■ bei denen die strahlungsförmigen Orientierungsbahnen fächerartig sich aufweitend von mindestens einem der Fixierungspunkte für den textilen Baukörper verlegt sind.

## Beschreibung

Die vorliegende Erfindung betrifft ein textiles Bauelement mit ausgerichteten Komponenten, das optional ein- oder beidseitig mit Beschichtungen versehen sein kann.

Überdachungen oder andere bauliche und konstruktive Elemente, die dem Sichtund/oder Wetterschutz sowie dem Licht- und/oder Sonnenschutz dienen, werden aus ästhetischen und konstruktiven Gründen häufig aus textilen Werkstoffen hergestellt. Je nach Einsatzzweck, Einsatzort und Größe der Überdachung muss das verwendete Material verschiedene Anforderungen erfüllen. Zu berücksichtigen sind Wind-, Wasser- und Schneelasten, die die Überdachung nicht übermäßig verformen oder gar reißen lassen dürfen. Des Weiteren kann Lichtdurchlässigkeit ein Parameter sein, der beachtet werden muss.

Diese für Überdachungen verwendeten Werkstoffe bestehen entweder aus gewebten Materialien oder aus Schichtkörpern (Laminaten), die ihre hauptsächliche Festigkeit aus eingelegten Geweben, Fasergelegen ("Scrims") oder unidirektional eingelegten Fasern ("Inserts") gewinnen. So ist beispielsweise aus der EP-B-0 703 312 ein Dachgewebe bekannt, bei dem ein dreiachsig gewickeltes Trägergewebe mit Hauptgewebe- und Webkantenbereichen aus parallel verlaufenden Füllgarnen und zwei Gruppen jeweils parallel verlaufender Kettgarnen besteht, wobei die Füllgarne und die zwei Gruppen von Kettgarnen jeweils zueinander konstant bleibende Kreuzungswinkel einschließen. An den Webkanten sind zu deren Verstärkung die Kettgarne jeweils aus einer Gruppe paralleler Einfachgarne gebildet. Das derart aufgebaute Trägergewebe ist schließlich beidseitig mit einem PVC-Material überzogen.

Als außenseitiges Schutzmaterial für Radome schlägt die DE-C-31 06 365 ein Membranmaterial vor, das zuinnerst einen in drei Achsen gewebten Stoff aus Polyaramidfasern aufweist, bei dem die Polyaramidfasern in drei Fraktionen aus jeweils parallel verlaufenden Fasern aufgebaut sind bei einem bevorzugten Winkel zwischen den Faserachsen der drei Fraktionen von 60°. Der Stoff ist beidseitig mit einem (Poly-)Urethanharz besprüht, ferner weist das Membranmaterial außenseitig zusätzlich eine Klebstoffschicht sowie einen Polyvinylfluoridharzfilm auf.

Den bekannten Konstruktionen ist es also gemein, dass in ihnen strukturelle Elemente (überwiegend Polyester- und Glasfasern) parallel in Gruppen angeordnet sind. So sind demnach dreiachsig gefertigte Gewebe als textile Bauelemente mit einer Vielzahl an Kreuzungspunkten der Fasern bekannt, bei denen jedoch zwingend die Fasern innerhalb der einzelnen Fasergruppen parallel verlaufen. In diesem Sinne wird in der WO 02/18692 darauf hingewiesen, dass die stark konkaven Aussenkanten von Sonnensegeln und anderen textilen Bauten es unmöglich machen, die entlang dieser Kanten auftretenden hohen Kräfte mittels herkömmlicher Kett- und Schusskonstruktionen aufzufangen. Auch zusätzliche Fasern entlang der dort diskutierten 45°-Richtung eines Gewebes oder Schichtkörpers können dieses Problem nicht zufriedenstellend lösen.

Neben einem Aufbau von Geweben aus Gruppen jeweils parallel verlaufender Fasern sind aber auch Fasergefüge aus beliebig verteilten Fasern innerhalb einer so genannten wirren Struktur bekannt. So beschreibt die DE 22 33 334 ein nicht gattungsgemäßes Vlies aus schlingenförmigen Fasern, das durch Wärmebehandlung oder Hinzufügen eines Bindemittels verfestigt werden kann. Das bekannte Vlies ist für Vliestücher vorgesehen, bei dem eine Stabilität, wie sie für Bauelemente von Nöten ist, nicht angedacht ist.

Sicht-, Licht-, Sonnen- und Wetterschutzdächer beziehungsweise -Einrichtungen sind temporär oder permanent installierte Einrichtungen an Land oder an Land- und Wasserfahrzeugen. In jedem Fall sind sie hohen Kräften durch Wind und Wetter ausgesetzt, denen sie standhalten müssen. Um den auftretenden Belastungen gerecht zu werden, sind herkömmliche Gewebe und Laminate bzw. PVC-Schichtkörper vergleichsweise schwer. Bereits Standard-Qualitäten weisen Flächengewichte von bis zu 1.500g/qm auf. Allein das Gewicht der so genannten Membrane, also des fertig verarbeiteten Daches oder Dachsegments erfordert eine besonders solide Haltekonstruktion.

Allen herkömmlichen flexiblen Materialien ist es ferner gemein, dass die Lichtdurchlässigkeit über die gesamte Fläche konstant ist. Sie kann innerhalb einer Materialqualität nicht erheblich variieren. Zur Erreichung einer höheren Lichtdurchlässigkeit werden herkömmliche Materialien bisweilen nachträglich perforiert bzw. so gefertigt, dass zwischen den Fasern durchbrochene Leerräume entstehen, die nicht durch eine vollflächige Beschichtung geschlossen sind. Jedoch ist auch hier die Lichtdurchlässigkeit innerhalb einer Qualität konstant.

Ein weiteres Merkmal der herkömmlichen Gewebe und Schichtkörper ist deren begrenzte Breite. Größere Flächen müssen deshalb aus vielen Bahnen zusammengefügt werden. Die Verbindungen dieser Bahnen (genähte, geklebte oder geschweißte Nähte) sind gerade in der Nähe der Kraftpunkte hohen Belastungen ausgesetzt und müssen deshalb besonders aufwändig verarbeitet werden. Die Kraftpunkte selbst müssen mit mehreren Lagen an Doppelungen verstärkt werden und die Kräfte müssen über extern angebrachte Drähte oder Kabel geführt werden, so dass Gewebe oder Schichtkörpermaterial entlastet werden. Die Anschlüsse zwischen Kabeln und textiler Konstruktion haben sich in der Vergangenheit häufig als problematisch in der Ausführung gezeigt.

In anderen Fällen werden durchsichtige Folien, z.B. aus ETFE, für Überdachungen verwendet oder zu Kissen verarbeitet, die mit trockener Druckluft oder einem anderen Gas gefüllt bzw. durchspült werden. Die Kissen werden als Decken- oder Wandelemente verwendet. Aufgrund der eingeschränkten Festigkeit der Folie sind der Größe der Dachflächen und der einzelnen Kissen allerdings enge Grenzen gesetzt.

In Anbetracht der aufgezeigten Probleme lt. des gewürdigten Standes der Technik besteht die Aufgabe darin, der Öffentlichkeit ein textiles Bauelement zur Verfügung zu stellen, das geeignet ist für Überdachungen und Sonnenschutzeinrichtungen und das Designern, Architekten und Statikern aufgrund einer bezogen auf seine Belastbarkeit viel geringeren flächenbezogenen Masse wesentlich großzügigere Grenzen für die zu konstruierenden Baukörper zugestehen vermag. Demzufolge ist die Erfindung - verglichen mit dem bisherigen Stand der Technik - geeignet, Bauelemente mit geringerer spezifischer Masse bereitzustellen, das bedeutet, Bauelemente die bei gleichen Dimensionen wie bisher viel leichter sind bzw. Bauelemente, die bei gleicher Masse ein wesentlich höhere Stabilität aufweisen: mit solchen erfindungsgemäßen Bauelementen können dann größere Flächen oder größere Luft gefüllte Kissen hergestellt werden. Darüber hinaus können die das erfindungsgemäße Bauelement tragende Bauteile, zum Beispiel Aufhängungen, Tragwerke, Stützen und Halteseile, einerseits weniger massig und damit kostengünstiger sowie andererseits weitaus filigraner ausgeführt werden.

Vorgeschlagen wird ein textiler Baukörper, umfassend ausgerichtete Komponenten, deren Ausrichtung entlang von Orientierungsbahnen verlaufen, **dadurch gekennzeichnet,** dass die Orientierungsbahnen mindestens sinuslinig und/oder mindestens strahlungsförmig verlaufen und
■ bei denen die sinuslinigen Orientierungsbahnen zur Ausrichtung der Komponenten mit unterschiedlichen Amplituden zwischen benachbarten Fixierungspunkten für den textilen Baukörper verlegt sind,
■ bei denen die strahlungsförmigen Orientierungsbahnen fächerartig sich aufweitend von mindestens einem der Fixierungspunkte für den textilen Baukörper verlegt sind.

Die sinuslinigen Orientierungsbahnen zur Ausrichtung der Komponenten machen dabei innerhalb des erfindungsgemäßen textilen Baukörpers praktisch immer jeweils eine halbe Sinuskurve aus.

Die Komponenten bestehen bevorzugt aus Fasern, insbesondere aus solchen Fasern, ausgesucht aus der Liste, umfassend:
Polyester-, Carbon-, Glas-, poly-paraphenylene terephthalamide- (Aramid, Twaron), copoly-(paraphenylene/3,4'-oxydiphenylene terephthalamide)- (Technora), Polyethylen-(UHMPE, HMPE, Dyneema, Spectra), poly(p-phenylene-2,6-benzobisoxazole)- (PBO, Zylon), Polyvinyl Alcohol- (PVA, Kuralon), Polyarylate-Fasern (Vectran), Flourpolymer-(ePTFE) oder metallisierte Fasern,
ohne auf diese Fasern beschränkt zu sein. Auch Mischungen aus den vorstehend offenbarten Fasern untereinander oder mit weiteren, hier nicht offenbarten Fasern sind möglich. Eine besondere Präferenz ist seitens des Erfinders gegeben für Polyesterfasern, Carbonfasern, Glasfasern sowie hochfeste Polyethylenfasern, wie beispielsweise UHMPE, HMPE, Dyneema sowie auf die Faserkombinationen von Carbon- mit hochfesten Polyethylenfasern und von hochfesten Polyethylenfasern mit Polyesterfasern.

Die Komponenten, deren Ausrichtung entlang von Orientierungsbahnen verlaufen, sind bevorzugt auf mindestens einer Seite mit einem mindestens einlagigen außenseitigen Substrat unlöslich verbunden. Die bevorzugt vorgefertigten Substrate sind beispielsweise solche, ausgesucht aus der Liste, umfassend:
Polyester-, Polyvinylfluorid- (PVF) oder Ethylen-Tetrafluorethylen-Film (ETFE) oder Geweben oder Polyvinylchlorid (PVC),
ohne auf diese Substrate beschränkt zu sein. Auch mehrlagige Kombinationen der zuvor aufgelisteten Substrate sind möglich wie beispielsweise die Kombination von Polyester-Film und Polyester-Gewebe bzw. die Kombination von Polyester-Film mit Polyvinylchlorid (PVC). Bei den Polyester-Filmen sind dabei Dicken in einem Bereich von 19 bis 50 Mikrometern bevorzugt, während der bevorzugte Bereich für Ethylen-Tetrafluorethylen-Filme (ETFE) bei 25 bis 250 Mikrometer liegt. Hinsichtlich PVC-Beschichtungen sind flächenbezogene Massen von 150 bis 600 g/m² bevorzugt.

In einer ganz besonders bevorzugten Ausführungsform sind die Komponenten, deren Ausrichtung entlang von Orientierungsbahnen verlaufen, beidseitig mit einem jeweils mindestens einlagigen außenseitigen Substrat unlöslich verbunden. Beide bevorzugt vorgefertigten Substrate sind beispielsweise solche, ausgesucht aus der Liste, umfassend:
Polyester-, Polyvinylfluorid- (PVF) oder Ethylen-Tetrafluorethylen-Film (ETFE) oder Geweben oder Polyvinylchlorid (PVC),
ohne auf diese Substrate beschränkt zu sein. Auch mehrlagige Kombinationen der zuvor aufgelisteten Substrate sind möglich wie beispielsweise die Kombination von Polyester-Film und Polyester-Gewebe bzw. die Kombination von Polyester-Film mit Polyvinylchlorid (PVC). Auch hier sind bei den Polyester-Filmen Dicken in einem Bereich von 19 bis 50 Mikrometern bevorzugt, während der bevorzugte Bereich für Ethylen-Tetrafluorethylen-Filme (ETFE) bei 25 bis 250 Mikrometer liegt. Auch sind erneut hinsichtlich möglicher PVC-Beschichtungen flächenbezogene Massen von 150 bis 600 g/m² bevorzugt.

Falls erforderlich können Substrate und/oder Fasern mit Polyester-, Polyurethan-Klebern oder anderen geeigneten Haftvermittlern beschichtet sein.

Das hier vorgeschlagene textile Bauelement ermöglicht die Herstellung von planen oder geformten Bauteilen oder Baugruppen, die mittels geeigneter Zusammensetzung von Substraten und mindestens sinuslinig bzw. halbsinuslinig und/oder mindestens strahlungsförmig orientierten Komponenten bzw. Fasern an die konstruktiven und ästhetischen Bedürfnisse angepasst werden können und somit auch für sehr große Bauteile oder komplexe Lastsituationen geeignet sind. Eine wesentliche Rolle spielt hierbei die Möglichkeit, die Dichte und die Anzahl der Orientierungsbahnen der eingebundenen Komponenten bzw. Fasern in Abhängigkeit der zu erwartenden Kräfte individuell anpassen zu können. Die Anordnung der Komponenten bzw. Fasern erlaubt weiterhin, eine ausreichende Menge dieser Komponenten bzw. Fasern in den Krafteinleitungspunkten, das sind die Fixierungspunkte für das erfindungsgemäße Bauelement, zu bündeln und somit auf Doppelungen der ein- oder beidseitigen Substrate und andere externe Verstärkungen weitgehend zu verzichten.

Es gilt als bevorzugt, wenn die sinuslinig bzw. halbsinuslinig orientierte Orientierungsbahn mit der geringsten Amplitude eine Außenseite des textilen Baukörpers zwischen zwei benachbarten Fixierungspunkten darstellt. Ferner gilt es als bevorzugt, wenn beginnend mit der sinuslinig bzw. halbsinuslinig orientierten Orientierungsbahn mit der größten Amplitude die Orientierungsbahnen hin zur sinuslinigen bzw. halbsinuslinigen Orientierungsbahn mit der geringsten Amplitude immer dichter verlegt sind.

Die Auswahl der Substrate ermöglicht es unter anderem, das Erscheinungsbild zu steuern. Es kann optisch klar, transluzent bzw. opak oder lichtundurchlässig sein und in verschiedenen Farben gestaltet werden. Mittels der Dichte der mindestens sinuslinig bzw. halbsinuslinig und/oder mindestens strahlungsförmig orientierten Komponenten bzw. Fasern lassen sich Festigkeit und Opazität einstellen. So kann ein Bereich mit weniger dicht angeordneten Orientierungsbahnen für die Komponenten bzw. Fasern viel Licht durchlassen, während ein anderer Bereich des gleichen Bauelements aufgrund einer höheren Dichte der angeordneten Orientierungsbahnen für die Komponenten bzw. Fasern einen hohen Abschattungsgrad bietet, zum Beispiel vor einer Fensterfront an einem durch das vorgeschlagenen Bauelement beschatteten Gebäude. In Bereichen, in denen hohe Lasten verlaufen, zum Beispiel entlang der Kanten, können die Orientierungsbahnen für die Komponenten bzw. Fasern in höherer Dichte verlegt werden, womit diese Bereiche dehnungs- und reißfester sind.

Darüber hinaus können die Orientierungsbahnen für die Komponenten bzw. Fasern so verlegt werden, dass sie ein Marken-, Firmen- oder Familienzeichen oder andere grafische Elemente in der Durchsicht wie eine Wasserzeichen darstellen. Die Wirkung kann durch geeignete Anordnung der Komponenten bzw. Fasern erzielt und zusätzlich mittels Verwendung verschiedenfarbiger Komponenten bzw. Fasern oder unterschiedlicher Titer (das sind die Fasergewichte der Fasern) verstärkt werden.

Die Herstellung des erfindungsgemäßen Bauelements kann auf einer planen Werkbank erfolgen oder über einer Positiv- oder Negativform des fertigen Werkstücks. Sind die vorgefertigten Oberflächensubstrate lediglich in begrenzter Breite verfügbar, dann müssen sie in geeigneter Weise zugeschnitten werden und können dann in der gewünschten Form auf der Werkbank oder in der Form angeordnet werden. Die Stöße dieser Bahnen können überlappen oder auf Stoss verbunden werden.

Unter Nutzung einer geeigneten Vorrichtung werden dann die Komponenten bzw. Fasern entlang der vorgesehenen und/oder berechneten, erfindungsgemäßen Orientierungsbahnen,
■ die sinuslinig bzw. halbsinuslinig zwischen vorgesehenen benachbarten Fixierungspunkten für den textilen Baukörper und/oder
■ strahlungsförmig, fächerartig sich aufweitend, von mindestens einem dieser vorgesehenen Fixierungspunkte für den textilen Baukörper verlaufen,
verlegt, wobei diese Komponenten bzw. Fasern einzeln oder in Gruppen abgelegt werden können. Die Komponenten bzw. Fasern können mit einem geeigneten Klebstoff, wie beispielsweise Polyester-Kleber mit einer bevorzugten Auftragsmasse von 20 bis 50 g/m², beschichtet sein (Prepreg-Verfahren) oder werden im Produktionsprozess mit Kleber beschichtet. Die Verlegevorrichtung wird entlang mehrerer Achsen gesteuert, um sich der Kontur des Werkstücks auf der Werkbank anpassen zu können und die Komponenten bzw. Fasern entlang der berechneten Belastungslinien bzw. Orientierungsbahnen abzulegen.

Das Verlegen der Komponenten bzw. Fasern kann in mehreren Gruppen aus jeweils diesen Komponenten bzw. Fasern, deren Ausrichtung entlang von Orientierungsbahnen verläuft, - völlig unabhängig voneinander - erfolgen. Dadurch können sich verschiedene Gruppen, die jeweils sinuslinig bzw. halbsinuslinig zwischen vorgesehenen benachbarten Fixierungspunkten und/oder strahlungsförmig, fächerartig sich aufweitend, von mindestens einem dieser vorgesehenen Fixierungspunkte verlaufen, überlagern und es werden zahlreiche Kreuzungspunkte der Komponenten bzw. Fasern entstehen, die die Formbeständigkeit des fertigen Bauelements verbessern helfen. Des Weiteren können vorgefertigte Gelege aus Komponenten bzw. Fasern verwendet werden, um eine ausreichende Festigkeit zu erzielen und den Produktionsprozess zu beschleunigen.

Auf das erste Substrat und die darauf ruhenden Fasern wird ganz besonders bevorzugt ein zweites Substrat gelegt. Dieses ist wiederum in geeigneter Weise vorbereitet worden, um sich dem Werkstück oder der Form, auf der das Werkstück liegt, anpassen zu können. Die Stöße der Bahnen, falls eine Unterteilung in Bahnen erforderlich ist, können überlappend oder auf Stoss verbunden werden.

Substrate und Komponenten bzw. Fasern werden abschließend mittels Druck und Wärme unlösbar miteinander verbunden, bevorzugt verklebt. Der Druck kann mittels einer Walze oder Stempel erzeugt werden. Alternativ kann Vakuum oder eine Kombination von Walze, Stempel und Vakuum eingesetzt werden. Die erforderliche Wärme zur Aktivierung des Klebers oder kurzzeitigem Verflüssigen der Substrate kann aus Strahlungswärme (zum Beispiel Infrarot), Kontaktwärme, Hochfrequenz- oder Ultraschall-Schweißen gewonnen werden. Werden zur Verklebung von Substrat und Fasern beispielsweise und bevorzugt Polyester-Klebstoffe verwendet, sind Verklebetemperatur und der Verklebedruck so hoch zu wählen, dass eine umfassende Aktivierung des Klebers stattfindet, was idealerweise bei Temperaturen in einem bevorzugten Bereich von 100°C bis 120°C und bei einem Druck bis zu 8.000 hPa gegeben ist.

Die Erfindung wird anhand der nachfolgenden Figuren weitergehend veranschaulicht:

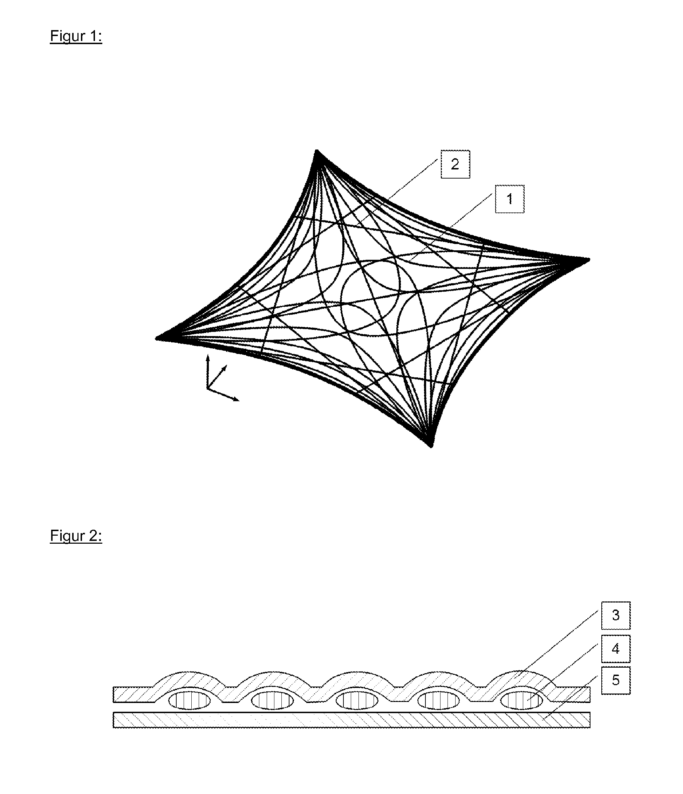

Figur 1 stellt eine mögliche Ausführungsform des erfindungsgemäßen Bauelements dar, hier ausgeführt als planes, 2-dimensionales Bauelement. Dieses Bauelement kann für sich eine Überdachung bilden oder ist ein Teil eines Baukörpers, der aus mehreren Bauelementen wie in Figur 1 zu sehen, dauerhaft zusammen gefügt wird. Die Orientierungsbahnen (1) zur Ausrichtung der Komponenten bzw. Fasern sind sinuslinig mit unterschiedlichen Amplituden zwischen benachbarten Fixierungspunkten für den textilen Baukörper verlegt. Sie beginnen an den Ecken des Bauelements, das sind dessen Fixierungspunkte, und somit dort, wo die größten Kräfte auftreten. Zusätzlich zu den sinuslinigen Orientierungsbahnen (1) können geradlinige Orientierungsbahnen (2) ausgeführt sein.

Figur 2 illustriert den Aufbau eines erfindungsgemäßen Bauelements. Die Substrate (3) und (5) bilden die Ober- beziehungsweise Unterseite des Bauelements und somit die flächigen Außenseiten. Dazwischen eingebettet liegen die das Komponentengewebe ausbildenden Fasern (4).

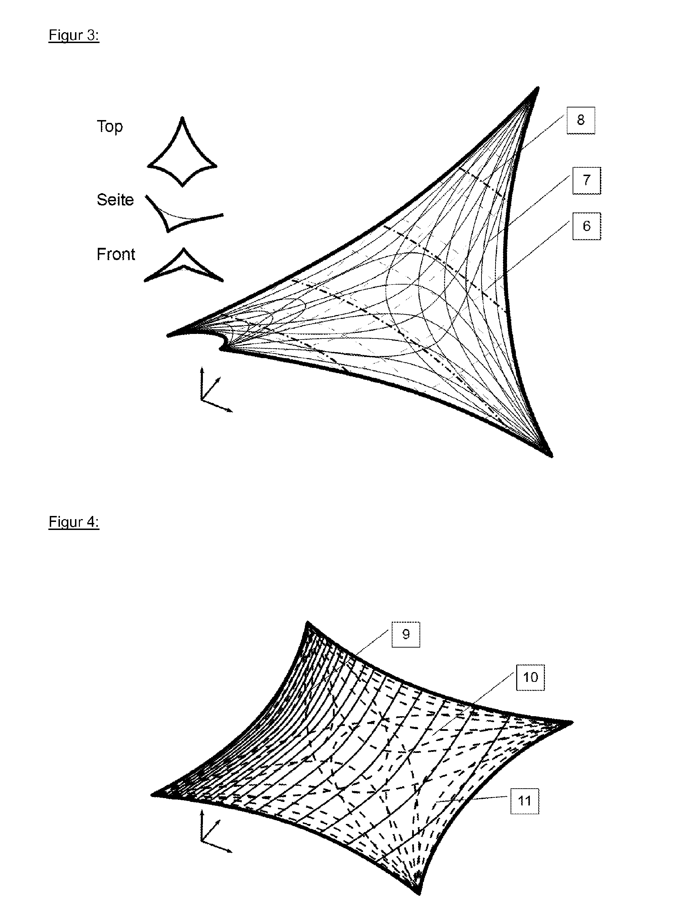

Figur 3 stellt eine weitere Ausführungsform des erfindungsgemäßen Bauelements dar, hier einen Sonnen- und Wetterschutz, ausgeführt als Sattelfläche oder hyperbolischen Paraboloiden. Die Konturlinien (6) zeigen den antiklastischen (gegensinnigen) Krümmungsverlauf. Die Orientierungsbahnen (7) für die Komponenten bzw. Fasern verleihen dem Bauelement die erforderliche Festigkeit. Sie sind hinsichtlich ihrer Orientierung und Dichte in geeigneter Weise angeordnet. Zum Beispiel können die Aussenkanten wie dargestellt mittels dichter beieinander liegender Orientierungsbahnen zusätzlich verstärkt werden. Die Nähte (8) dienen einzig der Formgebung des Sattelkörpers. Ihre Zahl kann auf ein Mindestmass reduziert werden, das ausreicht, eine ausreichend genaue Abwicklung des 3-dimensionalen Bauelements zu erzielen. Bei textilen Werkstoffen sind dies zumeist weniger Nähte, als die handelsübliche Breite der herkömmlichen Materialien es zulässt.

Figur 4 veranschaulicht das Konzept der variablen Dichte der Orientierungsbahnen zur Steuerung der Lichtdurchlässigkeit. Im Bereich mit hoher Dichte (9) wird mehr Licht absorbiert als im Bereich mit geringerer Dichte (10). Zusätzliche Orientierungsbahnen zur Steuerung der Lichtdurchlässigkeit können zur Ergänzung der üblicherweise vorgesehenen Orientierungsbahnen (11) angebracht werden.

## Patentansprüche

1. Textiler Baukörper, umfassend ausgerichtete Komponenten, deren Ausrichtung entlang von Orientierungsbahnen verlaufen, **dadurch gekennzeichnet, dass** die Orientierungsbahnen mindestens sinuslinig und/oder mindestens strahlungsförmig verlaufen und
■ bei denen die sinuslinigen Orientierungsbahnen zur Ausrichtung der Komponenten mit unterschiedlichen Amplituden zwischen benachbarten Fixierungspunkten für den textilen Baukörper verlegt sind,
■ bei denen die strahlungsförmigen Orientierungsbahnen fächerartig sich aufweitend von mindestens einem der Fixierungspunkte für den textilen Baukörper verlegt sind.

2. Textiler Baukörper nach Patentanspruch 1, **dadurch gekennzeichnet, dass** die sinuslinigen Orientierungsbahnen zur Ausrichtung der Komponenten jeweils eine halbe Sinuskurve ausmachen.

3. Textiler Baukörper nach einem der Patentansprüche 1 oder 2, **dadurch gekennzeichnet, dass** die sinuslinige Orientierungsbahn mit der geringsten Amplitude eine Außenseite des textilen Baukörpers zwischen zwei benachbarten Fixierungspunkten darstellt.

4. Textiler Baukörper nach Patentanspruch 3, **dadurch gekennzeichnet, dass** beginnend mit der sinuslinigen Orientierungsbahn mit der größten Amplitude die Orientierungsbahnen hin zur sinuslinigen Orientierungsbahn mit der geringsten Amplitude immer dichter verlegt sind.

5. Textiler Baukörper nach einem der Patentansprüche 1 bis 4, **dadurch gekennzeichnet, dass** die Komponenten aus Fasern bestehen.

6. Textiler Baukörper nach einem der Patentansprüche 1 bis 4, **dadurch gekennzeichnet, dass** die Komponenten aus Fasern bestehen, ausgesucht aus der Liste, umfassend:
Polyester-, Carbon-, Glas-, poly-paraphenylene terephthalamide- (Aramid, Twaron), co-poly-(paraphenylene/3,4'-oxydiphenylene terephthalamide)- (Technora), Polyethylen- (UHMPE, HMPE, Dyneema, Spectra), poly(p-phenylene-2,6-benzobisoxazole)-(PBO, Zylon), Polyvinyl Alcohol- (PVA, Kuralon), Polyarylate-Fasern (Vectran), Flourpolymer- (ePTFE) oder metallisierte Fasern.

7. Textiler Baukörper nach einem der Patentansprüche 1 bis 6, **dadurch gekennzeichnet, dass** die Komponenten auf mindestens einer Seite mit einem mindestens einlagigen außenseitigen Substrat unlöslich verbunden sind.

8. Textiler Baukörper nach einem der Patentansprüche 1 bis 6, **dadurch gekennzeichnet, dass** die Komponenten beidseitig mit einem jeweils außenseitigen Substrat unlöslich verbunden sind.

9. Textiler Baukörper nach einem der Patentansprüche 1 bis 6, **dadurch gekennzeichnet, dass** das Komponentengewebe auf mindestens einer Seite mit einem mindestens einlagigen Substrat unlöslich verbunden ist, ausgesucht aus der Liste, umfassend:
Polyester-, Polyvinylfluorid- (PVF) oder Ethylen-Tetrafluorethylen-Film (ETFE) oder Geweben oder Polyvinylchlorid (PVC).

10. Textiler Baukörper nach einem der Patentansprüche 1 bis 9, **dadurch gekennzeichnet, dass** Substrate und/oder Fasern mit Polyester-, Polyurethan-Klebern beschichtet sind.

11. Textiler Baukörper nach einem der Patentansprüche 9 oder 10, **dadurch gekennzeichnet, dass** der auf mindestens einer Seite mit den Komponenten verbundene Polyester-Film als Substrat eine Dicke in einem Bereich von 19 bis 50 Mikrometern aufweist.

12. Textiler Baukörper nach einem der Patentansprüche 9 oder 10, **dadurch gekennzeichnet, dass** der auf mindestens einer Seite mit den Komponenten verbundene Ethylen-Tetrafluorethylen -Film als Substrat eine Dicke in einem Bereich von 25 bis 250 Mikrometern aufweist.

13. Textiler Baukörper nach einem der Patentansprüche 1 bis 12, **dadurch gekennzeichnet, dass** die Orientierungsbahnen für die Komponenten ein grafisches Elemente in der Durchsicht darstellen.

14. Verfahren zur Herstellung eines textilen Baukörpers nach einem der Patentansprüche 1 bis 13, umfassend ausgerichtete Komponenten, deren Ausrichtung entlang von Orientierungsbahnen verlaufen, wobei die Orientierungsbahnen mindestens sinuslinig und/oder mindestens strahlungsförmig verlaufen und
■ bei denen die sinuslinigen Orientierungsbahnen zur Ausrichtung der Komponenten mit unterschiedlichen Amplituden zwischen benachbarten Fixierungspunkten für den textilen Baukörper verlegt sind,
■ bei denen die strahlungsförmigen Orientierungsbahnen fächerartig sich aufweitend von mindestens einem der Fixierungspunkte für den textilen Baukörper verlegt sind.
